(19) **Europäisches Patentamt**

**European Patent Office**

**Office européen des brevets**

(11) Veröffentlichungsnummer : **0 451 451 B1**

(12) **EUROPÄISCHE PATENTSCHRIFT**

(45) Veröffentlichungstag der Patentschrift :
**20.04.94 Patentblatt 94/16**

(51) Int. Cl.$^5$ : **F01P 7/08,** F16D 43/25,
F16D 43/284, F16D 43/30,
F16D 43/00

(21) Anmeldenummer : **91101584.0**

(22) Anmeldetag : **06.02.91**

(54) **Selbsttätig schaltbarer Ventilator für das Kühlsystem von Kraftfahrzeugen.**

(30) Priorität : **12.04.90 DE 4011946**
**08.11.90 DE 4035510**

(43) Veröffentlichungstag der Anmeldung :
**16.10.91 Patentblatt 91/42**

(45) Bekanntmachung des Hinweises auf die
Patenterteilung :
**20.04.94 Patentblatt 94/16**

(84) Benannte Vertragsstaaten :
**DE FR GB IT**

(56) Entgegenhaltungen :
**EP-A- 0 052 859**
**DE-A- 1 403 492**

(56) Entgegenhaltungen :
**DE-A- 3 228 741**
**GB-A- 1 053 251**
**US-A- 2 438 161**
**US-A- 4 471 861**

(73) Patentinhaber : **Ryba, Anton**
**Europaallee 170**
**I-39100 Bozen (IT)**
Patentinhaber : **Mair-Egg, Harald Dr.**
**I- St. Leonhard Passeier (IT)**

(72) Erfinder : **Ryba, Anton**
**Europaallee 170**
**I 39100 Bozen (IT)**

(74) Vertreter : **Seidel, Herta, Dipl.-Phys.**
**Siedlungsstrasse 3**
**D-84494 Lohkirchen (DE)**

EP 0 451 451 B1

EP 0 451 451 B1

**Beschreibung**

Die Erfindung betrifft eine Schalteinrichtung eines in einem Kühlsystem eines Kraftfahrzeugs angeordneten Ventilators mit einer Reibungskupplung, über die der Ventilator an die Antriebswelle des Motors des Kraftfahrzeugs ankuppelbar ist und einem aus einem gasdichten Metallbalg bestehenden Thermostaten, der eine feste und eine nachgiebige Wandung aufweist und eine Flüssigkeit enthält, deren Dampfdruck in einem vorgegebenen Temperaturbereich die Kupplung in Eingriff bringt.

Bei Fahrzeugen mit Verbrennungsmotoren müssen im Kühlsystem Ventilatoren angeordnet werden, um in allen Fahrzuständen die notwendige Wärmeabfuhr zu erreichen.

Ist der Ventilator mit dem Motor starr verbunden und berücksichtigt man, daß der Leistungsaufwand für den Ventilator sehr erheblich ist, so sind Vorkehrungen, um dies zu vermeiden, gerechtfertigt.

Um die genannten Nachteile zu vermeiden. ist schon seit langem bekannt, eine Verbindung von Ventilator und Motor, über schaltbare Reibungskupplungen oder Flüssigkeits-Schlupfkupplungen vorzusehen. Auch der Antrieb eines Ventilators mittels eines eigenen Elektromotors wird bereits bei quer zur Fahrtrichtung eingebauten Antriebsmotoren eingesetzt. Alle diese Ausführungen befriedigen jedoch nur zum Teil oder überhaupt nicht, weil sie technische, betriebliche und preisliche Nachteile aufweisen.

Ein Ventilator für Kraftfahrzeuge der eingangs genannten Art ist bekannt aus der EP-A-52 853 Bei diesem Ventilator. ruht der Thermostat.Er kuppelt in Abhängigkeit von der Temperatur der ihn überstreichenden Kühlluft den Ventilator aufgrund des Dampfdruckes des in seinem Innern im kritischen Temperaturbereich bereits siedenden Füllmediums über seine nachgiebige Wandung an die Antriebswelle des Motors an und läuft dann mit den Flügeln des Ventilators mit. Der Anpreßdruck zwischen Thermostat und Gegenkupplung des Ventilators wird noch durch die Fliehkraft des im Thermostaten verbleibenden Restflüssigkeitsanteiles verstärkt.

Der Erfindung liegt nun die Aufgabe zugrunde, eine Konstruktion anzugeben, deren Ausführung besonders einfach und kostengünstig ist und die es ermöglicht, den Ventilator entweder in Abhängigkeit von der Temperatur des Kühlwasserstromes oder in Abhängigkeit von der Temperatur des Kühlluftstromes zu steuern.

Erfindungsgemäß wird dies dadurch erreicht, daß sich der Thermostat gemeinsam mit der Wasserpumpenwelle dreht und daß die Balgabmessungen und die Füllmenge des im Thermostaten befindlichen flüssigen Mediums derart aufeinander abgestimmt sind, daß der bei der Rotation des Thermostaten vor dessen Ankupplung an den Ventilator aufgrund der auf das Füllmedium des Thermostaten ausgeübten Fliehkräfte entstehende Flüssigkeitsring praktisch außerhalb des wirksamen Balgquerschnitts ($a_w$) verbleibt und daß die Ankupplung des Ventilators in einem vorgegebenen Temperaturbereich praktisch ausschließlich durch den im Thermostat entstehenden Dampfdruck des Füllmediums bewirkt wird.

Produzenten von Metallbälgen sind in der Lage, dem Fachmann für die von ihm gewünschten Balgeinsatzfälle Daten über den für die nachgiebige Wandung des Metallbalgs übertragbaren Druck anzugeben, wobei der hierbei wirksame Balgquerschnitt in Abhängigkeit von dem Balginnendurchmesser und dem Balgaußendurchmesser angegeben werden kann. Aus der Kenntnis dieser Daten ist es daher möglich, für einen vorgegebenen Balg die jeweils zweckmäßige Menge des Füllmediums zu bestimmen, um zu erreichen, daß in keiner der während des Betriebs des Kraftfahrzeuges durchlaufenden Betriebsphasen der Anteil an flüssigem Füllmedium eine so hohe axial wirkende Fliehkraftkomponente aufweist, daß ein zu frühes Ankoppeln des Ventilators an die Wasserpumpenwelle erfolgen würde.

Entsprechend ist es dem Fachmann aber auch möglich, aufgrund der für den Kopplungsvorgang benötigten Druckkräfte die jeweils erforderliche Menge des Füllmediums festzulegen, um bei vorgegebenem Balgvolumen den erforderlichen Dampfdruck in dem vorgegebenen Temperaturbereich zu erzielen. Aus diesen Größen lassen sich wiederum aus den Meß- und Datentabellen der Balgproduzenten, die den Forderungen der Erfindung entsprechenden Bälge finden.

In der Praxis würde in machen Anwendungsfällen eine Kühlwassertemperatur abhängige Steuerung der Ventilatorschaltung bevorzugt werden, doch war dies bei den bisher bekannten Konstruktionen nur mit relativ großem zusätzlichem Aufwand möglich.

Gemäß einer bevorzugten Ausbildung der Erfindung läßt sich dies jedoch in einfacher Weise dadurch erreichen, daß die feste Wandung des Thermostaten mit dem Pumpenlaufrad fest verbunden ist und seine nachgiebige Wandung an das eine Ende einer in der als Hohlwelle ausgebildeten Wasserpumpenwelle in Axialrichtung verschiebbar angeordneten, zusammen mit der Wasserpumpenwelle rotierenden Stange angrenzt, mit deren anderem Ende ein Teil der Kupplung für den Ventilator in Verbindung steht, während der Gegenkupplungsteil unmittelbar am Ventilator angeordnet ist. Das heißt, die feste Wandung des Thermostaten liegt im Kühlwasserstrom und die Temperatur des Kühlwasserstromes bewirkt den Einschaltvorgang des Ventilators.

Gemäß einer weiteren vorzugsweisen Ausbildung der Erfindung kann das erfindungsgemäße Konstruktionsprinzip auch bei einem im Kühlluftstrom liegenden Thermostat angewendet werden. In diesem Fall ist die feste Wandung des Thermostaten mit der Wasserpumpenwelle fest verbunden und die nachgiebige Wandung

2

EP 0 451 451 B1

ist auf der Wasserpumpenwelle längsverschiebbar angeordnet. Die feste Wandung des Thermostaten ist dem Kühlluftstrom ausgesetzt und die nachgiebige Wandung kuppelt bei Erreichen eines vorgegebenen Temperaturbereiches über die Reibungskupplung den Ventilator an die Wasserpumpenwelle an.

Der besondere Vorteil dieser Ausbildung liegt darin, daß der überwiegende Teil der Komponenten in einfacher Weise aus thermoplastischem Kunststoff gespritzt werden kann, wodurch sich die Kupplung besonders preisgünstig herstellen läßt.

Vorzugsweise Konstruktionsmerkmale für eine einfache und gleichzeitig betriebssichere Ausführung des Schaltmechanismus ergeben sich aus den Unteransprüche sowie aus der nachstehenden Beschreibung von Ausführungsbeispielen anhand der Zeichnung.

Hierin zeigen:

Fig. 1    einen Axialschnitt eines in Abhängigkeit von der Kühlwassertemperatur selbsttätig schaltbaren Ventilators,

Fig. 2    einen Axialschnitt des Ventilators nach Fig.1 mit einer in der Ventilatornabe vorgesehenen Vorrichtung zur Verstärkung der Kupplungskräfte,

Fig. 3    eine stirnseitige Ansicht des Ventilators nach Fig 1,

Fig. 4    einen Axialschnitt eines in Abhängigkeit von der Temperatur der den Thermostaten überstreichenden Kühlluft schaltbaren Ventilators und

Fig. 5    einen Axialschnitt eines Ventilators nach Fig. 4 mit einer Vorrichtung zur Verstärkung der Kupplungskräfte.

Das Gehäuse 1 einer Wasserpumpe ist in bekannter Weise mit dem Motor des Kraftfahrzeuges verbunden. Die Wasserpumpenwelle 2 ist mit Kugellagern 3 im Gehäuse 1 gelagert. Am stirnseitigen Ende der Wasserpumpenwelle 2 ist das Pumpenlaufrad 4 aufgepreßt. Eine Wellendichtung 5 trennt den Wasserraurn vom Lagerteil. Auf der Wasserpumpenwelle 2 ist ferner eine Muffe 6 aufgepreßt, in der mit Nieten 9 eine aus den Teilen 7 und 8 gebildete Keilriemenscheibe für einen nicht dargestellten, die Verbindung zur Motorwelle herbeiführenden Keilriemen befestigt ist. Hierdurch wird die Wasserpulngenwelle 2 angetrieben und die Strömung des Kühlwassers bewirkt.

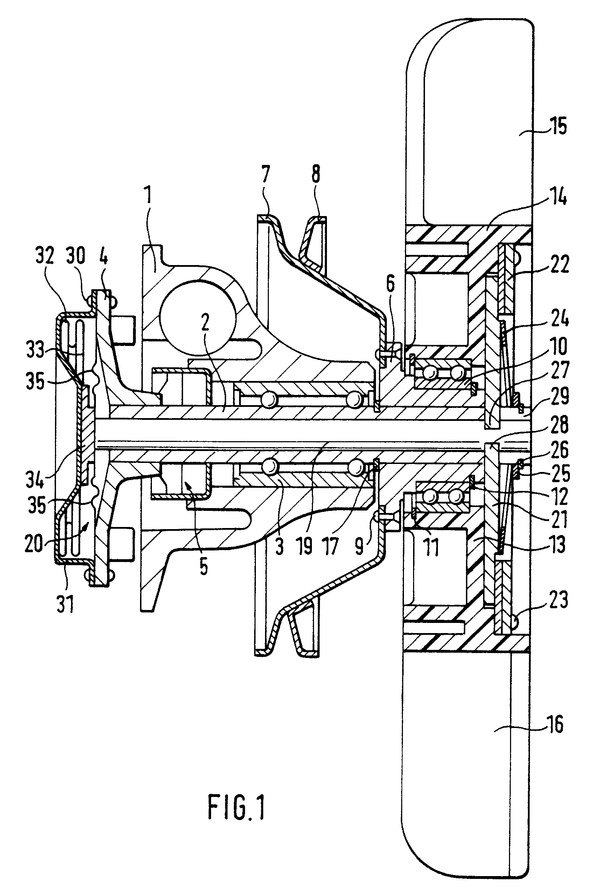

Auf der Muffe 6 ist jeweils die eine Schale der die Ventilatornabe 13 tragenden Kugellager 10 angeordnet und mittels eines Sprengringes 12 gegen axiale Verschiebung gesichert. Die jeweils gegenüberliegenden Gehäuseschalen der Kugellager 10 sitzen an der Ventilatornabe 13 und sind dort mit einem Sprengring 11 gegen Axialverschiebung gesichert. Auf diese Weise kann sich der aus der Nabe 13 und dem Außenteil 14, der die Flügel 15 und 16 trägt, gebildete Ventilator frei um die Wasserpumpenwelle 2 drehen. Ein Sprengring 17 sichert die Muffe 6 gegen Axialverschiebung. In den Ausführungsbeispielen nach Fig. 1 bis 5 sind die Ventilatorteile 13 und 14 einstückig aus thermoplastischem Kunststoff gefertigt, was eine besonders kostengünstige Fertigung ermöglicht.Hierbei ist es möglich, auch gleich die Einlage für die Gehäuse des Kugellagers 10 mit einzuspritzen.

In den Beispielen nach den Fig. 1 bis 3 ist die Wasserpumpenwelle 2 als Hohlwelle ausgebildet.

In dieser ist eine Stange 19 axial verschiebbar angeordnet. Das eine stirnseitige Ende der Stange 19 überragt die Wasserpumpenwalle 2 geringfügig und endet in der vertikalen Ebene der Außenfläche des Pumpenlaufrades 4. An der Außenfläche des Pumpenlaufrades 4 sind mittels Nieten 30 die Außenränder der festen Schale 31 eines Thermostates 23 befestigt. Der Thermostat 20 rotiert somit zusammen mit dem Wasserpumpenlaufrad 4. Der Thermostat 20 ist durch einen Metallbalg gebildet mit einer Mehrzahl von Balgwellen 32. Der durch die Balgwellentiefe bestimmte Innendurchmesser des Balges beträgt $d_1$mm. Sein Außendurchmesser $d_2$mm. Der wirksame Balgquerschnitt ergibt sich daher gemäß den Angaben der Balgproduzenten zu:

$a_W = \frac{\pi}{12}(d_1{}^2 + d_1 \cdot d_2 + d_2{}^2) \, 10^{-2}(cm^2)$. Die bewegliche Wandung (Membran) 33 des Thermostaten 20 ist mit einer Scheibe 34 verstärkt. Die Anzahl der Balgwellen 32 bestimmt sich aus der gewünschten für den Kupplungsvorgang erforderlichen Axialverschiebung der beweglichen Wandung 33. Sie beträgt im Mittel zwischen 2 bis 4 mm.

Das stirnseitige Ende der Stange 19 legt sich dicht von außen an die bewegliche Wandung 33/34 des Thermostaten 20 an. Zur sicheren Verhinderung des Kühlwasseraustritts im Bereich dieses stirnseitigen Endes der Stange 19 ist eine leicht durchbiegbare Scheibe 35 in Form einer Wellenmembrane vorgesehen.

Am gegenüberliegenden Ende der Stange 19 sitzt eine Reibscheibe 21 (siehe Fig. 1-2), die durch einen Schlitz 29 der Wasserpumpenwelle 2 hindurchgreift und mit Hilfe von zwei Nasen 27 und 28 auf der Stange 19 formschlüssig gelagert sind. Mit Hilfe der Stange 19 können somit Axialbewegungen der Membran 33/34 des Thermostates 20 auf die Reibscheibe 21 übertragen werden.

Eine Gegenreibscheibe 22 ist mit Schrauben 23 gegenüber der Reibscheibe 21 am Außenteil 14 des Ventilators befestigt. Die Gegenreibscheibe 22 bildet die Abschlußplatte des Ventilators.

Zur Justierung der Einschalttemperatur der Ventilatorkupplung 21,22 legt sich eine ringförmige Tellerfeder

3

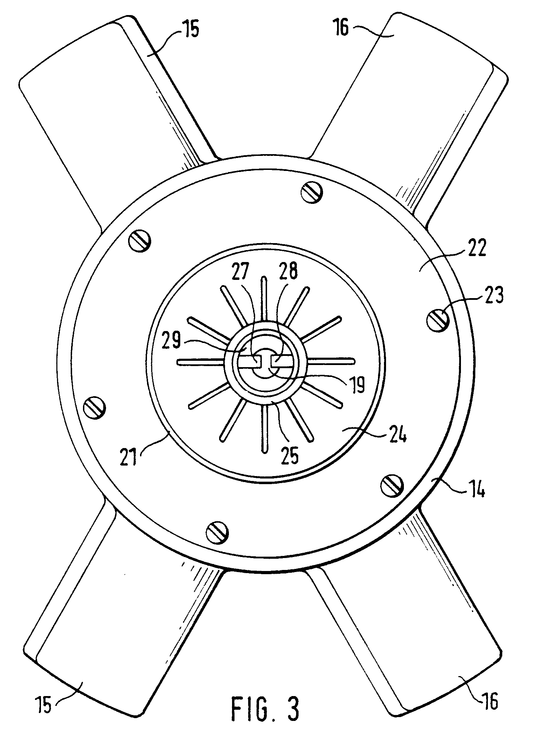

24 gegen die Reibscheibe 21. Der Innenrand der Tellerfeder 24 ist mittels eines Ringes 25 und eines Seegerringes 26 auf der Wasserpumpenwelle 2 gegen eine Axialverschiebung gehalten (siehe Fig.3). Die Federspannung wirkt über die Reibscheibe 21 einer Axialverschiebung der Stange 19 und damit auch der durch den Dampfdruck des Füllmediums im Thermostat bewirkten Bewegung der Membran 33/34 entgegen. Erst nach Überwindung der Federkraft der Tellerfeder 24 gelangt die Reibscheibe 21 in Kontakt mit dem Kupplungsteil der Gegenreibscheibe 22 und veranlaßt eine Übertragung des Drehmomentes auf den Ventilator.

Man kennt bereits zahlreiche Füllmedien für den hier verwendeten Thermostaten. Insbesondere haben sich Freone, insbesondere Freon $CCl_3F$ bewährt.

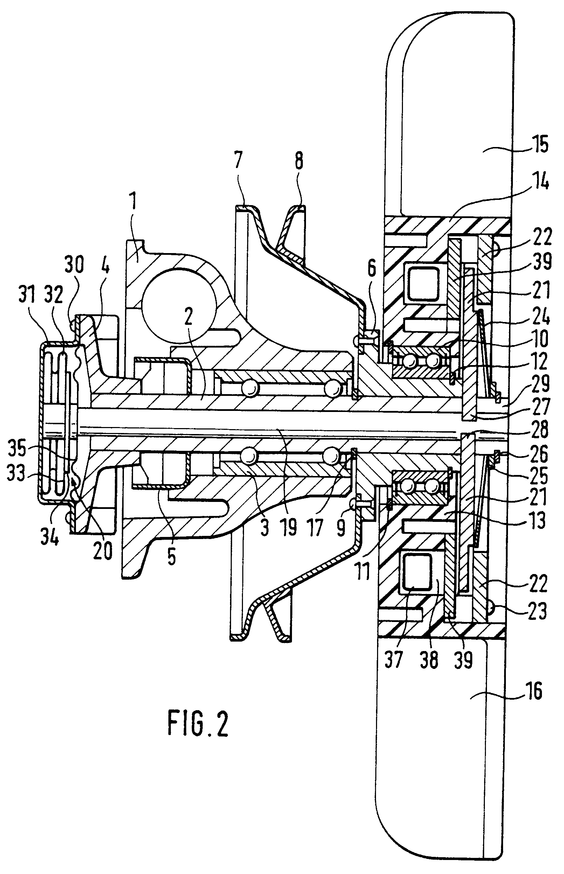

Die in Fig. 2 gezeigte Konstruktion eines selbsttätig schaltbaren Ventilators stimmt weitgehend mit derjenigen nach Fig.1 überein. Sich entsprechende Teile sind daher mit übereinstimmenden Bezugszeichen gekennzeichnet und brauchen im Zusammenhang mit Fig. 2 nicht nochmals beschrieben zu werden. Die konstruktiven Unterschiede der Ausbildung nach Fig. 2 beschränken sich auf den inneren und äußeren Teil 13 bzw. 14 des Ventilators. In der ringförmig die Muffe 6 umgebenden Nabe 13 des Ventilators ist eine umlaufende Nut 38 vorgesehen, in die ein mit einer Flüssigkeit, z.B. Wasser, gefüllter Schlauch 37 eingelegt ist. Sobald die aus der Reibscheibe 21 und der Reibscheibe 22 gebildete Kupplung aufgrund einer ausreichenden Axialverschiebung der Stange 19 in Eingriff gelangt und sich der Ventilator zu drehen beginnt, dreht sich der mit Flüssigkeit gefüllte Schlauch 37 mit. Die Flüssigkeit erfährt eine Zentrifugalkraft, deren Axialkomponente eine axialverschiebliche, am Teil 14 das Ventilators formschlüssig befestigte Reibscheibe 39 gegen die rückwärtige Fläche der Reibscheibe 21 preßt, sobald die Kupplung vom Thermostaten 20 her in Bewegung gesetzt wird. Bei dieser Ausbildung sind somit zwei Reibflächen aktiv, so daß die Kupplungskraft bei dieser Ausführung erhöht wird.

Die Wirkungsweise des erfindungsgemäßen, selbsttätig schaltbaren Ventilators nach den Fig. 1 bis 3 ist folgende:

Der als metallischer Faltenbalg ausgebildete Thermostat 20 mit einer axial beweglichen Membranwandung 33/34 hat den Außendurchmesser $d_2$ und den durch die Faltentiefe der Balgwellen bestimmten Innendurchmesser $d_1$. Als Füllmediun wird Freon 11 gewählt. Die Füllmenge wird so bemessen, daß sich beim Umlauf des Thermostaten 20 im Kühlwasser mit der Wasserpumpenwelle 2 im Kühlwasserstrom das flüssige Medium in den Falten der Balgwellen 32 sammelt und der Mittelteil des Balges, der sich ungefähr mit dem Innendurchmesser der durch die Formel $a_W = \frac{\pi}{12} (d_1{}^2 + d_1 \cdot d_2 + d_2{}^2) \cdot 10^{-2}$ (cm²) gegebenen wirksamen Fläche deckt, vom flüssigen Medium frei bleibt. In diesem Falle werden auch bei höchsten Umdrehungszahlen der Wasserpumpenwelle 2 keine axial gerichteten Fliehkraftkomponenten wirksam werden können.

Bei einer Kühlwassertemperatur von ca. 85° C - der Arbeitsbereich des im Kühlwasserstrom liegenden Thermostaten liegt etwa zwischen 70°C und 90°C - bewirkt der im Balginneren entstehende Dampfdruck des Füllmediums eine Axialverschiebung der Membran 33/44 und damit eine Verschiebung der Stange 19 in Richtung der Reibscheibe 21. Der durch die Stange 19 übertragene Dampfdruck des Füllmediums überwindet die Gegenkraft der Tellerfeder 24 und bringt die Kupplung 21,22 in Eingriff. Der Ventilator dreht sich.

Bei einer Ausbildung des selbsttätig schaltbaren Ventilators nach Fig. 2 wird mit Beginn der Drehbewegung des Ventilators auch der im Raum 38 des Ventilatorteils 14 befindliche, mit Flüssigkeit gefüllte Schlauch 37 in Drehung versetzt. Hierdurch wird auch eine axial wirkende Fliehkraftkomponente erzeugt, die sich zu der durch den Dampfdruck im Thermostaten 20 erzeugten, axial gerichteten Kraft addiert und die Kupplungskraft der hier aus den Reibscheiben 21,22, und 39 gebildeten Kupplung durch Verschiebung der Reibscheibe 39 gegen die rückwärtige Fläche der Reibscheibe 21 verstärkt.

Sinkt die Kühlwassertemperatur unter ca. 70°C, schaltet sich die Kupplung wieder aus. Diese Arbeitsweise wiederholt sich entsprechend den im Kühlwasserkreislauf vorliegenden Temperaturverhältnissen.

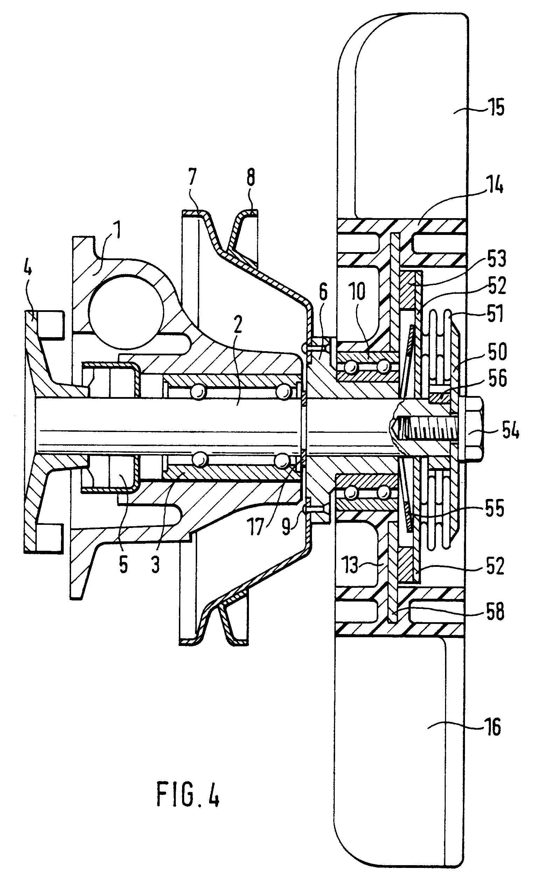

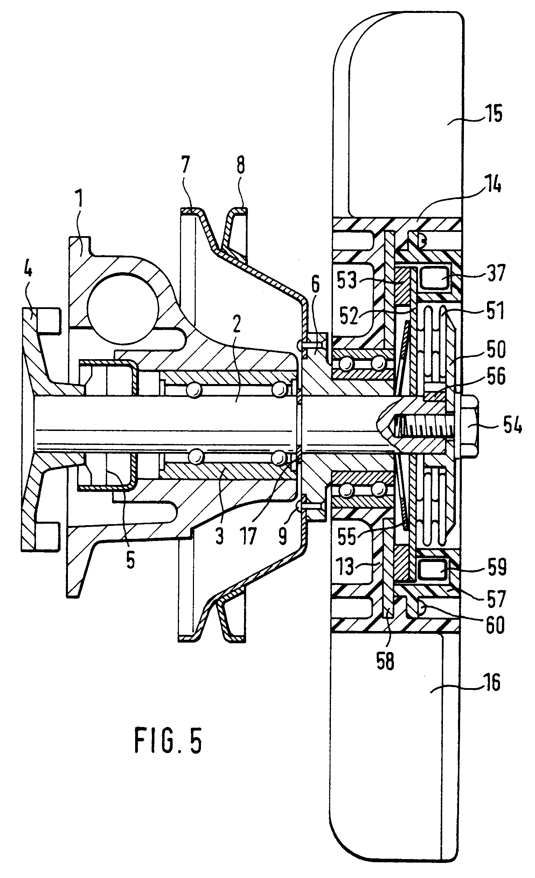

Auch bei der Ausbildung des selbsttätig schaltbaren Ventilators nach den Fig. 4 und 5 stimmt die Konstruktion weitgehend mit derjenigen in den Fig. 1 bis 3 gezeigten überein. Sich entsprechende Teile sind daher auch in diesen Fig. mit den gleichen Bezugszeichen wie in den Fig. 1 bis 3 bezeichnet. Ihr Zusammenbau und ihre Funktion braucht daher im folgenden auch nicht mehr wiederholt zu werden.

Der wesentliche Unterschied der in den Fig. 4 und 5 gezeigten Ausbildung eines selbsttätig schaltbaren Ventilators liegt darin, daß der als gasdichter Behälter ausgebildete Thermostat mit seiner festen Wandung 50 an dem den Ventilator 13,14,15,16 tragenden Ende der Wasserpumpenwelle 2 mittels eines Schraubenbolzens 54 befestigt ist und somit dem Kühlluftstrom und nicht wie in den vorstehend beschriebenen 8eispielen dem Kühlwasserstrom ausgesetzt ist. Der Aufbau des Thermostaten anspricht weitgehend demjenigen nach den Fig. 1 und 2. Er besteht aus einer festen Wandung 50, dem Metallbalg mit den Balgwellen 51 und einer nachgiebigen Wandung 52. Während die feste Wandung 50 mit Hilfe des Schraubenbolzens 54 fest mit der Wasserpumpenwelle 2 verbunden ist und mittels eines Keiles 56 drehfest gesichert ist, sitzt die fest mit dem Thermostat verbundene nachgiebiga Wandung 52 in axialer Richtung hin- und herverauf der Wasserpumpenwelle 2. Eine Tellerfeder 55 legt sich gegen die nachgiebige Wandung 52 und bestimmt durch ihre Federkraft den Temperaturbereich, in dem die nachgiebige Wandung 52 mit einem Reibteil 53 mit der Gegenreibscheibe 58 aus Metall in Eingriff kommt.

Die Gegenreibscheibe 58 ist in die einstückig aus thermoplastischem Kunststoff hergestellten Teile des Ventilators, nämlich seine Flügelteile 15 und 16, den äußeren Ventilatorteil 14 und die Nabe 13, eingespritzt. Das heißt mit anderen Worten, die Ventilatornabe 13 und der äußere Ventilatorteil 14 bilden einen Teil der Kupplung und können einstückig aus Plastik geformt sein.

Die Bemessung des Metallbalges mit den Balgwellen 51 ist so zu wählen, daß in dein in Frage stehenden Temperaturbereich das flüssige Füllmedium sich ausschließlich im Bereich der Balgwellen befindet, also der wirksame Balgquerschnitt von flüssigem Medium freibleibt und somit bei ausgeschaltetem Ventilator, aber bei sich drehender Wasserpumpenwelle 2, auch keine axiale Kraft auf die nachgiebige Wandung 52 des Thermostaten ausgeübt wird. Das heißt mit anderen Worten, es gelten die gleichen Überlegungen hinsichtlich der Auswahl des Thermosteten wie im Zusammenhang mit den Fig. 1 bis 3 bereits erörtert wurden.

Bei der Ausbildung des selbsttätig schaltbaren Ventilators nach Fig. 4 liegt die feste Wandung 50 des Thermostaten im Kühlluftstrom, während sich der Thermostat gemeinsam mit der Wasserpumpenwelle 2 dreht und von dem Ventilator 13, 14, 15, 16 abgekoppelt ist. Sobald die Kühllufttemperatur ansteigt, erhöht sich auch der Dampfdruck des Füllmediums im Thermostaten. Durch die Tellerfeder 55 läßt sich der Wert bestimmen, bei dem der Dampfdruck im Bereich der wirksamen Balgquerschnittsfläche einen solchen axial gerichteten Druck auf die nachgiebige Wandung 52 des Thermostaten ausübt, daß die Kupplungsteile 53 und 58 miteinander in Eingriff kommen und sich der Ventilator mit der Wasserpumpenwelle 2 dreht und zwar so lange dreht, bis eine ausreichende Kühlung erreicht ist und die Temperatur des Kühlluftstromes unter die Schalttemperatur fällt, die Kupplungsglieder wieder außer Eingriff gelangen und der Ventilator erneut ausgekuppelt wird.

Bei der Ausbildung des selbsttätig schaltbaren Ventilators nach Fig. 5 wird eine Verstärkung der Kupplungskraft durch ein in den äußeren Ventilatorteil 14 eingesetztes, aus Kunststoff bestehendes Gehäuseteil 57 erreicht, in das ein mit einer Flüssigkeit gefüllter ringförmiger Schlauch 59 eingesetzt ist. Sobald die Kupplungsglieder 53 und 58 in Eingriff kommen und sich der Ventilator zu drehen beginnt, unterliegt die im Schlauch befindliche Flüssigkeit einer Zentrifugalkraft, deren axiale Komponente den Anpreßdruck der Kupplungsteile 53 und 58 verstärkt.

## Patentansprüche

1.  Schalteinrichtung eines in einem Kühlsystem eines Kraftfahr zeugs angeordneten Ventilators (13,14,15,16) mit
    - einer Reibungskupplung (21,22,39), über die der Ventilator an die Antriebswelle des Motors des Kraftfahrzeugs ankuppelbar ist
    - und einem aus einem gasdichten Metallbalg (31,32,33) bestehenden Thermostaten (20), der eine feste (31) und eine nachgiebige (33) Wandung aufweist und eine Flüssigkeit enthält, deren Dampfdruck in einem vorgegebenen Temperaturbereich die Kupplung in Eingriff bringt,
    **dadurch gekennzeichnet,**
    daß sich der Thermostat (20,50,51,52) gemeinsam mit der Wasserpumpenwelle (2) dreht und
    daß die Balgabmessungen und die Füllmenge des im Thermostaten befindlichen flüssigen Mediums derart aufeinander abgestimmt sind,
    daß der bei der Rotation des Thermostaten vor dessen Ankupplung an den Ventilator aufgrund der auf das Füllmedium des Thermostaten ausgeübten Fliehkräfte entstehende Flüssigkeitsring praktisch außerhalb des wirksamen Balgquerschnitts ($a_w$) verbleibt und
    daß die Ankupplung des Ventilators in einem vorgegebenen Temperaturbereich praktisch ausschließlich durch den im Thermostat entstehenden Dampfdruck des Füllmediums bewirkt wird.

2.  Schalteinrichtung nach Anspruch 1, **dadurch gekennzeichnet,** daß die feste Wandung (31) des Thermostaten (20) mit dem Pumpenlaufrad (4) verbunden ist und seine nachgiebige Wandung (33/34) an das eine Ende einer in der als Hohlwelle ausgebildeten Wasserpumpenwelle (2) in Axialrichtung verschiebbar angeordneten, zusammen mit der Wasserpumpenwelle (2) rotierenden Stange (19) angrenzt, mit deren anderem Ende ein Teil (21) der Kupplung für den Ventilator in Verbindung steht, während der Gegenkupplungsteil (22) unmittelbar am Ventilator angeordnet ist.

3.  Schalteinrichtung nach Anspruch 2, **dadurch gekennzeichnet,** daß die Einschalttemperatur des Ventilators durch Wahl der Vorspannung einer auf die Stange (19), vorzugsweise über den mit dieser verbundenen Reibungskupplungsteil (21) wirkenden Federvorrichtung (24) bestimmbar ist.

4. Schalteinrichtung nach Anspruch 2 oder 3, **dadurch gekennzeichnet**, daß der mit dem Ventilatorkörper verbundene Teil der Reibungskupplung zwei in Abständen voneinander angeordnete ringförmige Reibflächen (22,39) umfaßt, zwischen die der mit der Stange (19) in Verbindung stehende Kupplungsteil (21) hineinragt und beim Kupplungsvorgang einen auf seine beiden Oberflächen wirkenden Anpreßdruck erfährt.

5. Schalteinrichtung nach einem der vorhergehenden Ansprüche, **dadurch gekennzeichnet**, daß die feste Wandung (50) des Thermostaten (50,51,52) mit der Wasserpumpenwelle (2) fest verbunden, ist und daß die nachgiebige Wandung (52) auf der Wasserpumpenwelle (2) längs verschiebbar angeordnet ist, wobei die feste Wandung (50) des Thermostaten dem Kühlluftstrom ausgesetzt ist und die nachgiebige Wandung, bei Erreichen eines vorgegebenen Temperaturbereiches über die Reibungskupplung (53,58) den Ventilator an die Wasserpumpenwelle ankoppelt.

6. Schalteinrichtung nach einem der vorhergehenden Ansprüche, **dadurch gekennzeichnet**, daß die Einschalttemperatur des Ventilators durch Wahl der Vorspannung einer Federvorrichtung (55) bestimmbar ist, die auf die nachgiebige Wandung (50) des Thermostaten wirkt.

7. Schalteinrichtung nach einem der vorhergehenden Ansprüche, **dadurch gekennzeichnet**, daß die nachgiebige Wandung (52) des Thermostaten bei Erreichen der Einschalttemperatur über ein Reibteil (53) und ein mit dem Ventilatorkörper fest verbundenes Gegenkupplungsteil (58) den Ventilator einschaltet.

8. Schalteinrichtung nach einem der vorhergehenden Ansprüche, **dadurch gekennzeichnet**, daß in dem Ventilatorkörper (14) ein konzentrisch zur Wasserpumpenwelle (2) verlaufender Flüssigkeitsring (37,59) vorgesehen ist, der nach erfolgter Kupplung zusammen mit dem Ventilator umlauft und durch die axiale Komponente der entstehenden Fliehkräfte den Anpreßdruck der Kupplungsteile (21,22 bzw. 53,58) verstärkt.

9. Schalteinrichtung nach Anspruch 8, **dadurch gekennzeichnet**, daß ein Gehäuseteil (57) für den Flüssigkeitsring (59) vorgesehen ist, das mit der Ventilatornabe (13), vorzugsweise mittels einer Schraube (60) fest verbunden ist.

10. Schalteinrichtung nach Anspruch 9, **dadurch gekennzeichnet**, daß das Gehäuseteil (57) aus Kunststoff besteht.

11. Schalteinrichtung nach einem der vorhergehenden Ansprüche, **dadurch gekennzeichnet**, daß das am Ventilatorkörper angeordnete Gegenkupplungsteil (58) aus Metall besteht.

12. Schalteinrichtung nach einem der vorhergehenden Ansprüche, **dadurch gekennzeichnet**, daß die Ventilatornabe (13) aus thermoplastischem Kunststoff besteht.

13. Schalteinrichtung nach Anspruch 11, **dadurch gekennzeichnet**, daß das Gegenkupplungsteil (58) aus Metall in den Kunststoff-Formkörper der Ventilatornabe (13) eingspritzt ist.

14. Schalteinrichtung nach einem der vorhergehenden Ansprüche, **dadurch gekennzeichnet**, daß die Ventilatornabe (13) und das Ventilatoraußenteil (14) sowie die Flügelteile (15 und 16) des Ventilators einstückig ausgebildet sind und aus thermoplastischem Kunststoff bestehen.

15. Schalteinrichtung nach einem der vorhergehenden Ansprüche, **dadurch gekennzeichnet**, daß die Nabe (13), in welche auch Teile der Kupplung eingeformt sind, aus thermoplastischem Kunststoff besteht.

**Claims**

1. Switching arrangement for a fan (13, 14, 15, 16) arranged in cooling system of a motor vehicle with
   - a friction clutch (21, 22, 39) by means of which the fan can be coupled to the drive shaft of the motor of the motor vehicle
   - and a thermostat (20) which consists of a gas-tight metal bellows (31, 32, 33), has one fixed wall (31) and one flexible wall (33) and contains a fluid the vapour pressure of which brings the clutch into engagement in a predetermined temperature range,

characterised in
that the thermostat (20, 50, 51, 52) rotates jointly with the water pump shaft (2) and
that the bellows dimensions and the filling quantity of the fluid located in the thermostat are co-ordinated with one another in such a way
that the fluid ring resulting from the centrifugal forces exerted on the filling medium in the thermostat during rotation of the thermostat before coupling of the latter to the fan remains practically outside the effective bellows cross-section ($a_w$) and
that the coupling of the fan in a predetermined temperature range is effected practically exclusively by the vapour pressure of the filling medium occurring in the thermostat.

2. Switching arrangement according to Claim 1, characterised in that the fixed wall (31) of the thermostat (20) is connected to the pump impeller (4) and the flexible wall (33/34) thereof abuts one end of a rod (19) which is arranged so as to be movable in the axial direction in the water pump shaft (2) constructed as a hollow shaft and rotates together with the water pump shaft (2), the other end of the rod being connected to a part (21) of the clutch for the fan, whilst the counter-clutch part (22) is arranged directly on the fan.

3. Switching arrangement according to Claim 2, characterised in that the cut-in temperature of the fan can be determined by choice of the initial tension of a spring device (24) which acts on the rod (19), preferably by means of the friction clutch part (21) which is connected to the rod.

4. Switching arrangement according to Claim 2 or 3, characterised in that the part of the friction clutch connected to the fan body comprises two annular friction surfaces (22, 39) which are arranged spaced from one another and between which the clutch part (21) connected to the rod (19) protrudes and during the clutch operation is subjected to a bearing pressure exerted on both of its surfaces.

5. Switching arrangement according to one of the preceding claims, characterised in that the fixed wall (50) of the thermostat (50, 51, 52) is fixed to the water pump shaft (2) and that the flexible wall (52) is arranged so as to be movable along the water pump shaft (2), wherein the fixed wall (50) of the thermostat is exposed to the cooling air stream and the flexible wall couples the fan to the water pump shaft by means of the friction clutch (53, 58) when a predetermined temperature range is reached.

6. Switching arrangement according to one of the preceding claims, characterised in that the cut-in temperature of the fan can be determined by choice of the initial tension of a spring device (55) which acts on the flexible wall (50) of the thermostat.

7. Switching arrangement according to one of the preceding claims, characterised in that when the cut-in temperature is reached the flexible wall (52) of the thermostat causes the fan to be cut in by means of a friction part (53) and a counter-clutch part (58) firmly connected to the fan body.

8. Switching arrangement according to one of the preceding claims, characterised in that there is provided in the fan body (14) a fluid ring (37, 59) which runs concentrically with the water pump shaft (2), revolves together with the fan after coupling has taken place and increases the bearing pressure of the clutch parts (21, 22 or 53, 58) by the axial components of the resulting centrifugal forces.

9. Switching arrangement according to Claim 8, characterised in that a housing part (57) for the fluid ring (59) is provided which is firmly connected to the fan hub (13), preferably by means of a screw (60).

10. Switching arrangement according to Claim 9, characterised in that the housing part (57) is made from plastics material.

11. Switching arrangement according to one of the preceding claims, characterised in that the counter-clutch part (58) arranged on the fan body is made from metal.

12. Switching arrangement according to one of the preceding claims, characterised in that the fan hub (13) is made from thermoplastic plastics material.

13. Switching arrangement according to Claim 11, characterised in that the counter-clutch part (58) made from metal is injected into the plastic moulded body of the fan hub (13).

**14.** Switching arrangement according to one of the preceding claims, characterised in that the fan hub (13) and the outer fan part (14) as well as the blade parts (15 and 16) of the fan are constructed in one piece and are made from thermoplastic plastics material.

**15.** Switching arrangement according to one of the preceding claims, characterised in that the hub (13) into which parts of the clutch are also moulded is made from thermoplastic plastics material.

## Revendications

**1.** Dispositif de commande d'un ventilateur (13, 14, 15, 16) implanté dans le système de refroidissement de véhicules automobiles avec
   - un embrayage à friction (21, 22, 39) grâce auquel on peut embrayer le ventilateur sur l'arbre d'entraînement du moteur du véhicule
   - et un thermostat (20) constitué d'un soufflet métallique hermétique au gaz (31, 32, 33), qui présente une paroi rigide (31) et une paroi souple (33) et contenant un liquide, dont la pression de vapeur met en prise l'embrayage dans un domaine de température prescrit,
   caractérisé en ce que le thermostat (20, 50, 51, 52) tourne avec l'arbre de la pompe à eau (2) et que les dimensions du soufflet et le remplissage de l'agent liquide se trouvant dans le thermostat sont adaptés l'un à l'autre de sorte que lors de la rotation du thermostat avant son embrayage sur le ventilateur, l'anneau de liquide formé par les forces centrifuges exercées sur l'agent de remplissage du thermostat reste pratiquement en dehors de la section efficace du soufflet ($a_w$) et que l'embrayage du ventilateur dans un intervalle prescrit de température est exclusivement réalisé par la pression de vapeur de l'agent de remplissage créée dans le thermostat.

**2.** Dispositif de commande selon la revendication 1, caractérisé en ce que la paroi rigide (31) du thermostat (20) est solidaire du rotor de pompe (4) et sa paroi souple (33/34) est disposée de façon à pouvoir coulisser en sens axial à l'une des extrémités d'un arbre de pompe à eau (2) exécuté en arbre creux, limitée par la tige (19) tournant avec l'arbre de pompe à eau (2), une partie (21) de l'embrayage du ventilateur est en liaison avec l'autre extrémité, tandis que la contre pièce d'embrayage (22) est fixée directement au ventilateur.

**3.** Dispositif de commande selon la revendication 2, caractérisé en ce qu'on détermine la température de déclenchement du ventilateur par le choix de la précontrainte d'un dispositif de ressort (24) s'exerçant sur la tige (19), de préférence par l'intermédiaire de la pièce d'embrayage à friction (21) qui lui est reliée.

**4.** Dispositif de commande selon la revendication 2 ou 3, caractérisé en ce que la pièce d'embrayage à friction solidaire du corps de ventilation comprend deux surfaces de friction (22, 39) annulaires disposées à un certain intervalle l'une de l'autre, entre lesquelles s'insère la pièce d'accouplement (21) solidaire de la tige (29) et lors de l'embrayage elle exerce une pression s'appliquant sur ses deux surfaces.

**5.** Dispositif de commande selon l'une des revendications précédentes, caractérisé en ce que la paroi rigide (50) du thermostat (50, 51, 52) est solidaire de l'arbre de pompe à eau (2) et que la paroi souple (52) est disposée de façon à pouvoir coulisser longitudinalement sur l'arbre de pompe à eau (2), la paroi fixe (50) du thermostat étant exposée au courant d'air de refroidissement et la paroi souple quand elle atteint un domaine de température présent, embraie par l'embrayage à friction (53, 58) le ventilateur sur l'arbre de pompe à eau.

**6.** Dispositif de commande selon l'une des revendications précédentes, caractérisé en ce qu'on peut déterminer la température de commande du ventilateur par le choix de la précontrainte d'un dispositif de ressort (55), qui s'exerce sur la paroi souple (50) du thermostat.

**7.** Dispositif de commande selon l'une des revendications précédentes, caractérisé en ce que la paroi souple (52) du thermostat enclenche le ventilateur par une pièce de friction (53) et une contre pièce (58) d'embrayage solidaire du corps de ventilateur.

**8.** Dispositif de commande selon l'une des revendications précédentes, caractérisé en ce qu'on prévoit dans le corps de ventilateur (14) un anneau de liquide (37, 59) s'étendant concentriquement à l'arbre de pompe à eau (2) qui, après réalisation de l'embrayage tourne avec le ventilateur et par la composante axiale des forces centrifuges créées renforce la pression d'application des pièces d'embrayage (21, 22 ou 53, 58).

9. Dispositif de commande selon la revendication 8, caractérisé en ce qu'on prévoir une pièce de boîtier (57) pour l'anneau de liquide (59) qui est fixée solidement au moyeu de ventilateur (13), de préférence au moyen d'une vis (60).

10. Dispositif de commande selon la revendication 9, caractérisé en ce que la pièce de boîtier (57) est en matière plastique.

11. Dispositif de commande selon l'une des revendications précédentes, caractérisé en ce que la contre pièce d'embrayage (58) disposée sur le corps de ventilateur est en métal.

12. Dispositif de commande selon l'une des revendications précédentes, caractérisé en ce que le moyeu de ventilateur (13) est en matière thermoplastique.

13. Dispositif de commande selon la revendication 11, caractérisé en ce qu'on moule par injection la contre pièce d'embrayage (58) en métal dans le corps moulé en matière plastique du moyeu de ventilateur (13).

14. Dispositif de commande selon l'une des revendications précédentes, caractérisé en ce que le moyeu de ventilateur (13) et la partie externe de ventilateur (14) ainsi que les pièces de pales (15 et 16) du ventilateur, sont formés d'une pièce et sont constitués de matière thermoplastique.

15. Dispositif de commande selon l'une des revendications précédentes, caractérisé en ce que le moyeu (13) dans lequel sont formées aussi des pièces de l'embrayage est en matière thermoplastique.

FIG.1

FIG.2

FIG. 3

EP 0 451 451 B1

FIG. 4

13

FIG. 5